# EUROPÄISCHE PATENTSCHRIFT

(11) **EP 1 621 420 B1**
(45) Veröffentlichungstag und Bekanntmachung des Hinweises auf die Patenterteilung: **26.12.2007**
(21) Anmeldenummer: 05012484.1
(22) Anmeldetag: 10.06.2005
(51) Int. Cl.: B60R 25/00

(54) **Anordung zum Sichern und Entsichern eines Kraftfahrzeugs**
Arrangement for locking or unlocking a vehicle
Arrangement pour verrouiller ou déverrouiller un véhicule

(30) Priorität: 27.07.2004 DE 102004036347
(43) Veröffentlichungstag der Anmeldung: 01.02.2006
(73) Patentinhaber: Hella KGaA Hueck & Co., 59552 Lippstadt (DE); Volkswagen Aktiengesellschaft, 38436 Wolfsburg (DE)
(72) Erfinder: Schütte, Guido, 59555 Lippstadt (DE); Scharwald, Lothar, 59558 Lippstadt (DE); Koch, Gerald, 38268 Broistedt (DE); Grave, Dietmar, 38116 Braunschweig (DE)
(74) Vertreter: Graefe, Jörg

(56) Entgegenhaltungen:
- EP-A- 0 982 201
- EP-A- 1 060 963
- DE-A1- 4 414 734
- DE-A1- 10 221 511

## Beschreibung

Die Erfindung betrifft eine Anordnung zum Sichern und Entsichern eines Kraftfahrzeuges mit einem Steuergerät, zumindest einem Auslöseelement und zumindest einem Mittel zum Sichern und zumindest einem Mittel zum Entsichern des Kraftfahrzeuges. Bei einer solchen Anordnung ist durch die Betätigung eines ersten Auslöseelements ein Auslösesignal zum Sichern an das Steuergerät sendbar. Ebenso kann durch ein zweites Auslöseelement ein Auslösesignal zum Entsichern an das Steuergerät gesendet werden.

Eine derartige Anordnung ist aus der Druckschrift mit der Veröffentlichungsnummer DE 197 18 764 C1 bekannt. Der Nachteil bei den aus dem Stand der Technik bekannten Anordnungen ist, dass es zu Fehlbedienungen kommen kann, zum Beispiel dadurch, dass die Auslöseelemente zum Sichern und die Auslöseelemente zum Entsichern zeitgleich oder unmittelbar aufeinanderfolgend betätigt werden. Insbesondere, wenn die Fehlbedienung unabsichtlich erfolgt, würde dies beispielsweise zu einem Sichern des Fahrzeugs, unmittelbar gefolgt zu einem Entsichern kommen oder umgekehrt. Der Benutzer müsste dann die von ihnen gewünschte Aktivierung durch eine neue Betätigung des Auslöseelements erneut einleiten, was einen erneuten Eingriff des Benutzers erfordert.

Aus der Druckschrift mit der Veröffentlichungsnummer DE 102 21 511 A1 ebenfalls eine Anordnung zum Sichern und Entsichern eines Kraftfahrzeuges mit einem Steuergerät, zumindest einem Auslöseelement und zumindest einem Mittel zum Sichern und zumindest einem Mittel zum Entsichern des Kraftfahrzeuges bekannt. Bei dieser Anordnung ist aufgrund des von dem Steuergerät empfangenen Auslösesignals zum Sichern und/oder des empfangenen Auslösesignals zum Entsichern durch das Steuergerät entweder nur das Mittel zum Sichern oder nur das Mittel zum Entsichern aktivierbar, um das Kraftfahrzeug zu sichern oder entsichern. Insbesondere ist mit dem Steuergerät auch bei gleichzeitigem unmittelbar aufeinander folgendem Empfang eines Auslösesignals zum Sichern und des Auslösesignals zum Entsichern entweder nur die Mittel zum Sichern oder nur die Mittel zum Entsichern aktivierbar. Eine unmittelbar aufeinander folgende Aktivierung der Mittel zum Sichern und der Mittel zum Entsichern ist somit ausgeschlossen.

Der Nachteil der in der Druckschrift DE 102 21 511 A1 offenbarten Anordnung ist, dass immer das erste Auslösesignal berücksichtigt wird. Ist also möglich, dass ein fehlerhaft gegebenes Auslösesignal anstelle es später gegebenen richtig gegebenen Auslösesignal berücksichtigt wird und das richtige Auslösesignal verworfen wird. Der Benutzer muss dann noch einmal eingreifen und die Fehleingabe korrigieren. Die Anordnung führt keine Plausibilitätsüberprüfung der Auslösesignale durch

Hier setzt die vorliegende Erfindung an.

Die Druckschrift EP 0982201 beschreibt eine Anordnung gemäß dem Oberbegriff des Anspruchs 1.

Der Erfindung liegt die Aufgabe zugrunde, eine Anordnung der eingangs genannten Art zum Sichern und Entsichern eines Kraftfahrzeugs vorzuschlagen, bei der ein erneuter Eingriff des Benutzers zum Auslösen des von ihm gewünschten Vorgangs unnötig ist und die Anordnung eine Plausibilitätsüberprüfung der erkannten Betätigungen der Auslöseelemente durchführt.

Diese Aufgabe wird erfindungsgemäß durch eine Anordnung zum Sichern und Entsichern eines Kraftfahrzeugs nach Anspruch 1 gelöst. Das Steuergerät ist so eingerichtet, dass bei einem unmittelbar aufeinander folgenden Empfang des Auslösesignals zum Sichern und des Auslösesignals zum Entsichern die Zeitdauer des zeitlich ersten Signals erfasst wird. Bei einem Überschreiten dieser Zeitdauer über einen ersten festgesetzten Wert können dann vorteilhaft die Mittel zum Sichern oder die Mittel zum Entsichern entsprechend diesem ersten Auslösesignal aktiviert werden. Sofern die Zeitdauer jedoch unter dem ersten festgesetzten Wert liegt, wird durch das Steuergerät dann die Zeitdauer des zeitlich zweiten Signals erfasst. Sofern das Steuergerät dann ein Überschreiten dieser Zeitdauer über einen zweiten festgesetzten Wert feststellt, können die Mittel zum Sichern oder die Mittel zum Entsichern entsprechend dem zweiten Auslösesignal aktiviert werden.

Das Steuergerät kann so eingerichtet sein, dass bei einem gleichzeitigen Empfang des Auslösesignals zum Entsichern und des Auslösesignals zum Sichern durch das Steuergerät, der gleichzeitige Empfang nur als Empfang des Auslösesignals zum Sichern oder des Auslösesignals zum Entsichern gewertet wird. Es wird somit der gleichzeitige Empfang entweder dem einen oder dem anderen Auslösesignal zugeordnet. Bei der weiteren Verarbeitung in dem Steuergerät wird diese Zuordnung beachtet.

Bei den Auslöseelementen kann es sich um Sensoren, insbesondere um Berührungssensoren handeln, die jeweils zumindest ein Sensorsignal erzeugen. Bei den Berührungssensoren kann es sich um Infrarotsensoren oder um kapazitive Sensoren handeln.

Eine erfindungsgemäße Anordnung kann ein Mittel zur Vorverarbeitung der von den Auslöselementen empfangenen Sensorsignale umfassen. Dieses Mittel zum Vorverarbeiten kann die Auslösesignale zum Sichern beziehungsweise zum Entsichern erzeugen und an das Steuergerät der erfindungsgemäßen Anordnung geben.

Das Mittel zur Vorverarbeitung kann ein kombiniertes Signal erzeugen, das die Auslösesignale zum Sichern beziehungsweise Entsichern umfasst. Dieses hat den Vorteil, dass nur ein Signal an das Steuergerät abgegeben werden muss. Für die Übertragung wird dann nur ein Übertragungskanal benötigt.

Eine erfindungsgemäße Anordnung kann ferner so eingerichtet sein, dass das Kraftfahrzeug in einen zweiten gesicherten Zustand gebracht werden kann. In diesem zweiten gesicherten Zustand kann das Kraftfahrzeug stärker oder weniger stark gesichert sein als in dem bisher diskutierten gesicherten Zustand. Befindet sich das Kraftfahrzeug in dem ersten oder dem zweiten gesicherten Zustand kann bei einem Auslösesignal zum Sichern das Steuergerät die Mittel zum Sichern beziehungsweise Entsichern so aktivieren, dass das Kraftfahrzeug in den jeweils anderen gesicherten Zustand gebracht wird.

Aus dem Stand der Technik sind ferner Fahrzeuge bekannt, die die Funktion eines so genannten Komfortschließens beziehungsweise Komfortöffnens haben. Komfortschließen heißt dann, dass bei einer Aktivierung der Mittel zum Sichern des Fahrzeugs automatisch geöffnete Fenster oder Schiebedächer geschlossen werden. Für das Schließen der Fenster beziehungsweise der Schiebedächer ist dabei in der Regel eine längere Zeit erforderlich. Ein Komfortöffnen bedeutet, dass nach einer Aktivierung der Mittel zum Entsichern je nach Einstellung durch den Benutzer beispielsweise Schiebedächer oder Fenster geöffnet werden. Auch hierfür ist eine längere Zeit notwendig, die über die übliche Zeit zum Entsichern des Fahrzeugs zum Beispiel durch Entriegeln der Schlösser hinausgeht. Wenn jetzt während des Komfortschließens oder Komfortöffnens die Auslöseelemente betätigt werden, kann dies bei Fahrzeugen gemäß dem Stand der Technik zu Fehlfunktionen führen. Eine erfindungsgemäße Anordnung kann, um dieses zu verhindern, so eingerichtet sein, dass das Steuergerät Auslösesignale, die kleiner als eine dritte festgelegte Zeitdauer sind, nicht beachtet werden. Der Komfortschließvorgang oder der Komfortöffnungsvorgang wird dann fortgesetzt.

Ein Ausführungsbeispiel für eine erfindungsgemäße Anordnung ist anhand der Zeichnung näher beschrieben. Darin zeigt
- Fig. 1: ein Blockschaltbild der erfindungsgemäßen Anordnung,
- Fig. 2a bis Fig. 2k: Zeitdiagramme eines kombinierten Signals, das die Auslösesignale zum Sichern beziehungsweise Entsichern und den Aktivierungszustand von Auslöseelementen umfasst und
- Fig. 3: eine Tabelle, aus welcher die aufgrund der Auslösesignale ausgelösten Vorgänge ersichtlich sind.

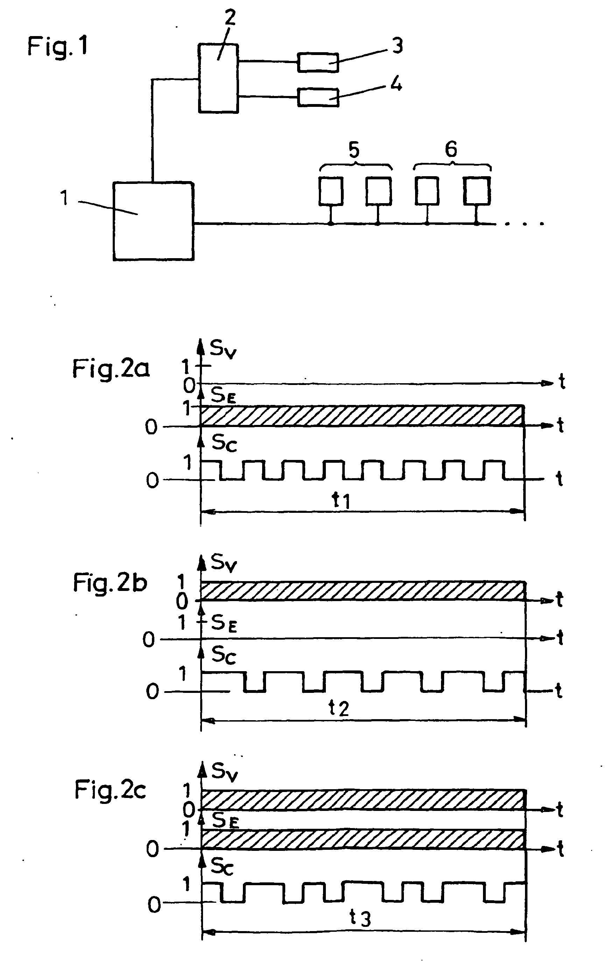

Die in Fig. 1 dargestellte erfindungsgemäße Anordnung zum Sichern und Entsichern eines Kraftfahrzeugs weist ein Steuergerät 1 auf, das mit Mitteln 5 zum Sichern und Mitteln 6 zum Entsichern des Kraftfahrzeuges über eine Busleitung verbunden ist. Über diese Busleitungen kann das Steuergerät 1 die Mittel 5, 6 zum Sichern beziehungsweise Entsichern aktivieren, damit die Mittel, die für das Sichern beziehungsweise Entsichern notwendigen Schritte durchführen.

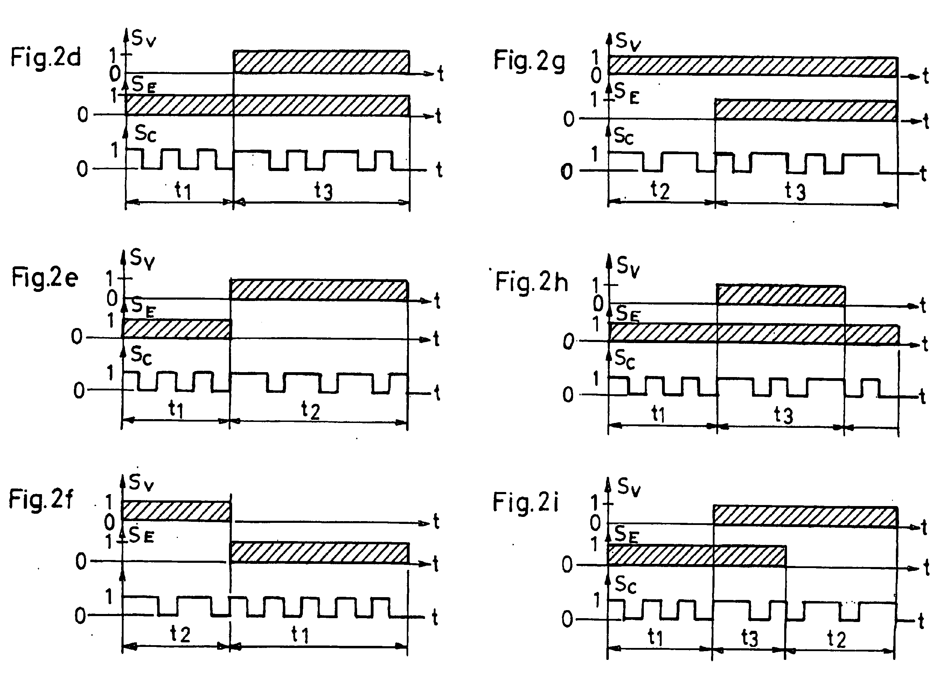

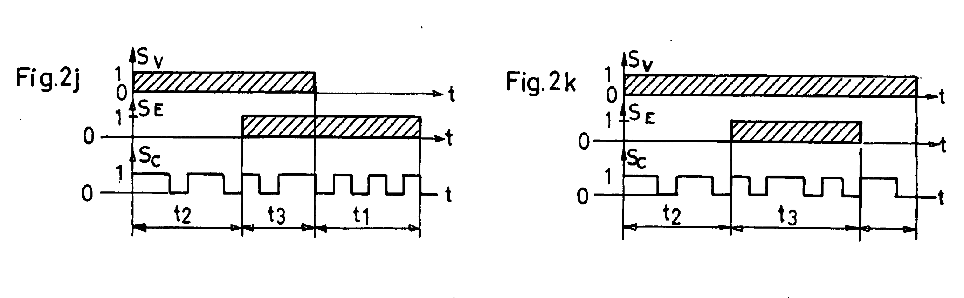

Die erfindungsgemäße Anordnung gemäß Fig. 1 umfasst ferner ein erstes Auslöseelement 3, mittels dem das Sichern des Kraftfahrzeugs ausgelöst werden kann, und ein zweites Auslöseelement 4, mit dem ein Entsichern des Kraftfahrzeugs ausgelöst werden kann. Die Auslöseelemente 3, 4 sind als kapazitive Berührungssensoren ausgeführt. Durch ein Berühren der Auslöseelemente 3, 4 erzeugen diese ein Sensorsignal, das die Berührung anzeigt. Der Aktivierungszustand der Sensoren ist in den Fig. 2a bis 2k in den beiden oberen Zeitverläufen dargestellt. In den Zeitverläufen steht eine 1 für eine Aktivierung des Auslöseelements und eine 0 für den Ruhezustand des Auslöseelements.

Die Anordnung umfasst schließlich ein Mittel 2 zur Vorverarbeitung der von den Auslöseelementen 3, 4 erzeugbaren Sensorsignale. Das Mittel zur Vorverarbeitung verarbeitet diese Sensorsignale und erzeugt ein kombiniertes Signal, das die Auslösesignale zum Sichern beziehungsweise Entsichern umfasst. Der Verlauf dieses kombinierten Signals ist in den Fig. 2a bis 2k in dem jeweils untersten Zeitverlauf dargestellt. Das Mittel 2 zur Vorverarbeitung sendet das kombinierte Signal an das Steuergerät 1, welches das kombinierte Signal auswertet, verarbeitet und entsprechend dem Signal die Aktivierung der Mittel 5, 6 zum Sichern beziehungsweise Entsichern einleitet.

In den Fig. 2a und 2b ist dargestellt, wie eine ordnungsgemäße Aktivierung der Auslöseelemente 3, 4 erfolgt. In Fig. 2a ist dargestellt, dass das Auslöseelement 4 zum Auslösen des Entsicherns aktiviert ist. Das daraufhin von dem Mittel 2 zur Vorverarbeitung erzeugte kombinierte Auslösesignal ist ebenfalls in Fig. 2a dargestellt. Es handelt sich dabei um eine Pulsfolge von Rechteckimpulsen, die ein Pulspauseverhältnis von eins haben. Die Zeitdauer der Aktivierung des Auslöseelements 4 beträgt t₁.

In Fig. 2b ist dargestellt, wie das Auslöseelement 3 zum Auslösen des Sicherns ordnungsgemäß aktiviert wird. Aufgrund des Sensorsignals erzeugt das Mittel 2 zur Vorverarbeitung eine Pulsfolge von Rechteckimpulsen, bei denen der Puls länger ist als die Pulspause. Das Pulspauseverhältnis ist ungefähr zwei zu eins. Die Zeitdauer, in der das Mittel 2 zur Vorverarbeitung das Auslösesignal an das Steuergerät 1 sendet, beträgt t₂.

Im Folgenden werden die Zeiten, in denen ausschließlich das Auslöseelement 4 zum Entsichern aktiviert ist, immer mit t₁ bezeichnet, während die Zeitdauern, in denen ausschließlich das Auslöseelement 3 zum Auslösen des Sicherns unabhängig von der Länge der Zeitdauer und vom Zeitpunkt des Beginns der Zeitdauer mit t₂ bezeichnet werden.

Die erfindungsgemäße Anordnung ist so eingerichtet, dass sie auch bei einer Fehlbedienung oder einer Mehrfachbedienung der Auslöseelemente eine Plausibilitätsüberprüfung vornimmt und aufgrund der Plausibilitätsüberprüfung entscheidet, ob und gegebenenfalls welche Mittel 5, 6 zum Sichern beziehungsweise Entsichern aktiviert werden.

Fehlbedienungen beziehungsweise Mehrfachbedienungen liegen unter Anderem dann vor, wenn das Auslöseelement zum Auslösen des Sicherns und das Auslöseelement 4 zum Auslösen des Entsicherns gleichzeitig aktiviert werden. Dieser Fall ist in Fig. 2c dargestellt. Werden beide Auslöseelemente 3, 4 zeitgleich ausgelöst, wird das in Fig. 2c dargestellte kombinierte Auslösesignal von dem Mittel 2 zur Vorverarbeitung erzeugt. Es handelt sich dabei ebenfalls um eine Pulsfolge von Rechteckimpulsen, wobei die Pulslänge zwischen einem kurzen Puls und einem doppelt so langem Puls wechselt, wobei die Pulspausen eine Länge haben, die der Länge des kurzen Pulses entspricht. Die Zeitdauer dieses kombinierten Signals, das aufgrund einer Aktivierung beider Auslöseelemente 3, 4 erzeugt wird, wird mit t₃ bezeichnet. Nachfolgend werden alle Zeiträume, unabhängig vom Zeitpunkt des Beginns und der Länge, in denen beide Auslöseelemente 3, 4 aktiviert sind, mit t₃ bezeichnet.

Ein weiterer Fehlerfall liegt dann vor, wenn das Auslöseelement 3 zum Auslösen des Sicherns und das Auslöseelement 4 zum Auslösen des Entsicherns unmittelbar hintereinander aktiviert werden, so dass bei einer seriellen Abarbeitung der daraufhin erzeugten Auslösesignale das Steuergerät Anweisungen zum Aktivieren der Mittel zum Sichern und der Mittel zum Entsichern unmittelbar hintereinander ausgibt. Diese Fälle sind in den Fig. 2e und 2f dargestellt.

In den Fig. 2d und 2g bis 2k sind weitere Fehlerfälle dargestellt, bei denen die Auslöseelemente 3, 4 zumindest teilweise zeitgleich aktiviert sind.

Das Steuergerät einer erfindungsgemäßen Anordnung ist so eingerichtet, dass die Zeiten t₃, in denen beide Auslöseelemente aktiviert sind, von dem Steuergerät so interpretiert werden, als sei nur das Auslöseelement 4 zum Auslösen des Entsicherns aktiviert. Damit lassen sich die Fehlerfälle vereinfachen, in denen eine parallele, d. h. zeitgleiche Aktivierung der Auslöseelemente 3, 4 zum Sichern beziehungsweise Entsichern erfolgt. Die Zeitdauern t₃ gelten für das Steuergerät 1 somit als Zeitdauern t₁, in denen nur das Auslöseelement 4 zum Auslösen des Entsicherns aktiviert ist. Dadurch reduziert sich die Anzahl der Fehlerfälle erheblich. Beispielsweise gilt der Fehlerfall, wie er in Fig. 2d dargestellt ist, nicht mehr als Fehler, sondern als alleinige Aktivierung des Auslöseelements 4 zum Entsichern.

Das Steuergerät 1 der erfindungsgemäßen Anordnung ist ferner so eingerichtet, dass nicht aufgrund jeder Aktivierung eines der Auslöseelemente die Mittel 6 zum Entsichern oder die Mittel 5 zum Sichern aktiviert werden. Vielmehr muss, damit das Steuergerät eine Aktivierung der Mittel 5, 6 zum Sichern beziehungsweise Entsichern vornimmt, das entsprechende Auslöseelement 3, 4 für eine festgelegte Zeitdauer aktiviert sein. Dabei ordnet das Steuergerät 1 Zeiten, in denen beide Auslöseelemente aktiviert sind, wie bereits ausgeführt der Aktivierungszeit des Auslöseelements 4 zum Auslösen des Entsicherns zu.

Die festgelegte Zeitdauer, für die das Auslöseelement 3 zum Auslösen des Sicherns aktiviert sein muss, damit das Steuergerät 1 eine Aktivierung der Mittel 5 zum Sichern auslöst, wird im Nachfolgenden mit tᵥ bezeichnet. Die Zeitdauer, die das Auslösesignal zum Entsichern am Steuergerät anliegen muss, oder als angelegt gilt (wenn beide Auslöseelemente aktiviert sind), wird nachfolgend mit tₑ bezeichnet.

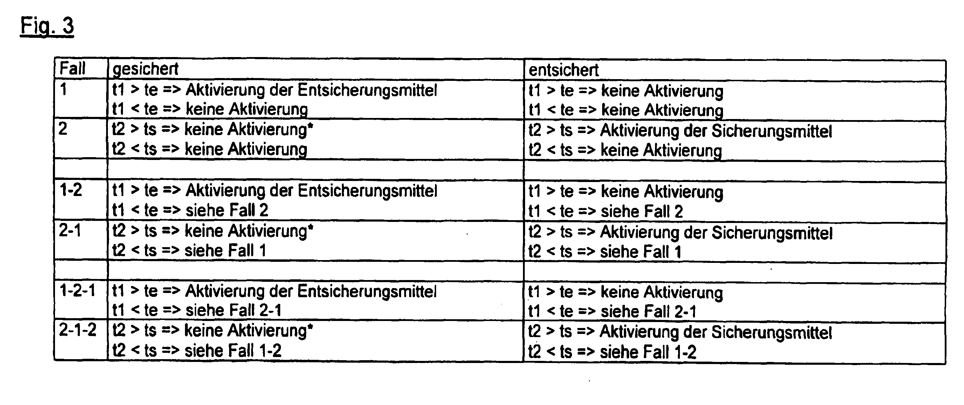

Die Auswertung des kombinierten Auslösesignals, dass das Steuergerät 1 von dem Mittel 2 zur Vorverarbeitung empfängt, ist in Fig. 3 dargestellt, wobei in der ersten Spalte die verschiedenen Fälle des kombinierten Signals angegeben sind, in der zweiten Spalte die Verarbeitung des Signals und die daraus folgenden Aktionen, die vom Steuergerät 1 eingeleitet werden, wenn das Fahrzeug in einem gesicherten Zustand ist, und in der dritten Spalte das gleiche, wenn das Fahrzeug in einem entsicherten Zustand ist.

Der Fall 1, der in der ersten Zeile näher beschrieben ist, ist der Fall, in dem lediglich das Auslöseelement 4 zum Auslösen des Entsicherns aktiviert ist. Ist das Fahrzeug im gesicherten Zustand, prüft das Steuergerät 1, ob die Zeitdauer t₁ des Auslösesignals größer als der erste festgelegte Wert tₑ ist. Ist dies der Fall, wird von dem Steuergerät 1 die Aktivierung der Entsicherungsmittel ausgelöst und das Fahrzeug entsichert. Ist die Zeit dagegen kleiner als die erste festgelegte Zeit tₑ, erfolgt keine Aktivierung.

Ist dagegen das Fahrzeug bereits im entsicherten Zustand, erfolgt in keinem der Fälle eine Aktivierung. Wahlweise könnte das Steuergerät so eingerichtet sein, dass, sofern die Zeitdauer T₁ größer als die erste festgelegte Zeitdauer tₑ ist, die Entsicherungsmittel erneut aktiviert werden.

Im Fall 2, der in der Zeile zwei der Tabelle gemäß Fig. 3 angegeben ist, wird lediglich das Auslöseelement 3 zum Auslösen der Sicherung aktiviert. Sofern die Zeitdauer t₂ des Auslösesignals, das von dem Steuergerät 1 empfangen wird, länger als die zweite festgelegte Zeitdauer tₛ ist, wird im entsicherten Zustand des Fahrzeugs (Spalte 3) eine Aktivierung der Sicherungsmittel durch das Steuergerät 1 ausgelöst. Ist die Zeitdauer dagegen kleiner, erfolgt im entsicherten Zustand des Fahrzeugs keine Aktivierung der Sicherungsmittel. Für den gesicherten Zustand (Spalte 2) des Kraftfahrzeugs gilt, dass, sofern die Zeit t₂ größer als die Zeitdauer tₛ ist, das Steuergerät so eingerichtet sein kann, dass eine erneute Aktivierung der Sicherungsmittel erfolgt. Das Steuergerät 1 der vorliegenden erfindungsgemäßen Anordnung führt eine solche erneuerte Aktivierung der Entsicherungsmittel jedoch nicht durch.

In einer weiteren Variante einer erfindungsgemäßen Anordnung für ein Kraftfahrzeug können das Kraftfahrzeug und die Anordnung so eingerichtet sein, dass das Kraftfahrzeug in einen zweiten gesicherten Zustand gebracht werden kann. Sofern das Kraftfahrzeug einen solchen zweiten gesicherten Zustand einnehmen kann, kann an der mit dem Stern in der Tabelle gekennzeichneten Stellen anstelle keiner Aktivierung eine Aktivierung der Sicherungsmittel stehen, die das Fahrzeug in den zweiten gesicherten Zustand überführt.

Im Weiteren wird der Fall 1-2 beschrieben, bei dem das Steuergerät 1 ein kombiniertes Auslösesignal empfängt, das zeitlich hintereinander zunächst ein Auslösesignal zum Entsichern umfasst, auf das ein Auslösesignal zum Sichern folgt. Befindet sich das Kraftfahrzeug im gesicherten Zustand, wird dann, wenn Zeitdauer t₁ des Auslösesignals zum Entsichern größer ist als die erste festgelegte Zeitdauer tₑ durch das Steuergerät 1 eine Aktivierung der Entsicherungsmittel vorgenommen. Das auf das Auslösesignal zum Entsichern folgende Auslösesignal zum Sichern wird dann verworfen. Ist die erste Zeitdauer tₑ durch die Zeitdauer t₁ des Auslösesignals zum Entsichern nicht überschritten worden, wird dagegen das Auslösesignal zum Sichern ausgewertet, ganz so wie es im Fall 2 erfolgt.

Ist das Fahrzeug dagegen im entsicherten Zustand, wird ebenfalls zunächst die Zeitdauer t₁ des zeitlich ersten Auslösesignals zum Entsichern ausgewertet, und sofern die Zeitdauer tₑ überschritten ist, keine Aktivierung eines Sicherungsmittels oder Entsicherungsmittels durchgeführt. Ist die Zeitdauer t₁ dagegen kleiner als tₑ wird das Auslösesignal zum Entsichern verworfen und das zeitlich auf das Auslösesignal zum Entsichern folgende Auslösesignal zum Sichern entsprechend Fall 2 ausgewertet. Sofern dann die Zeitdauer t₂ größer als die Zeitdauer tₛ ist, erfolgt eine Aktivierung der Sicherungsmittel.

Im Weitern sind in der Tabelle die Fälle angegeben, in denen zunächst ein Auslösesignal zum Sichern und dann ein Auslösesignal zum Entsichern erkannt wird (Fall 2-1), der Fall, in dem zeitlich zuerst ein Auslösesignal zum Entsichern gefolgt von einem Auslösesignal zum Sichern und erneut gefolgt von einem Auslösesignal zum Entsichern erkannt wird (Fall 1-2-1) und der Fall, in dem zunächst zeitlich zuerst ein Auslösesignal zum Sichern gefolgt von einem Auslösesignal zum Entsichern wiederum gefolgt von einem Auslösesignal zum Sichern von dem Steuergerät 1 erkannt wird (Fall 2-1-2). Die Auswertung durch das Steuergerät 1 erfolgt analog zu den vor beschriebenen Fällen, so dass auf eine Beschreibung der einzelnen Fälle im Weiteren verzichtet wird.

## Patentansprüche

1. Anordnung zum Sichern und Entsichern eines Kraftfahrzeugs mit einem Steuergerät (1), zumindest zwei Auslöseelementen (3, 4) und zumindest einem Mittel (5, 6) zum Sichern oder Entsichern, wobei
- durch Betätigung eines ersten Auslöseelements (3) der Auslöseelemente (3, 4) ein Auslösesignal zum Sichern an das Steuergerät sendbar ist,
- durch Betätigung eines zweiten Auslöseelements (4) der Auslöseelemente (3, 4) ein Auslösesignal zum Entsichern an das Steuergerät sendbar ist,
- aufgrund des empfangenen Auslösesignals zum Sichern und/oder des empfangenen Auslösesignals zum Entsichern durch das Steuergerät (1) die Mittel (5) zum Sichern oder die Mittel (6) zum Entsichern aktivierbar sind, um das Kraftfahrzeug zu sichern oder zu entsichern,
- wobei mit dem Steuergerät (1) bei gleichzeitigem und unmittelbar aufeinander folgendem Empfang des Auslösesignals zum Sichern und des Auslösesignals zum Entsichern jeweils nur die Mittel (5) zum Sichern oder nur die Mittel (6) zum Entsichern aktivierbar sind
**dadurch gekennzeichnet,**
**dass** durch das Steuergerät (1) bei unmittelbar aufeinander folgendem Empfang des Auslösesignals zum Sichern und des Auslösesignals zum Entsichern die Zeitdauer des zeitlich ersten Signals erfasst wird.

2. Anordnung nach Anspruch 1, **dadurch gekennzeichnet, dass** für das Steuergerät (1) der gleichzeitige Empfang des Auslösesignals zum Sichern und des Auslösesignals zum Entsichern als Empfang des Auslösesignals zum Sichern oder des Auslösesignals zum Entsichern gilt.

3. Anordnung nach Anspruch 1 oder 2, **dadurch gekennzeichnet, dass** durch das Steuergerät (1) bei einem Überschreiten der Zeitdauer über einen ersten festgesetzten Wert (tₑ, tᵥ) die Mittel (5) zum Sichern oder die Mittel (6) zum Entsichern entsprechend dem ersten Signal aktivierbar sind.

4. Anordnung nach Anspruch 3, **dadurch gekennzeichnet, dass** durch das Steuergerät (1) bei Unterschreiten der Zeitdauer unter den ersten festgesetzten Werten (tₑ, tᵥ) die Zeitdauer des zeitlich zweiten Signals erfassbar ist.

5. Anordnung nach Anspruch 4, **dadurch gekennzeichnet, dass** durch das Steuergerät (1) bei einem Überschreiten der Zeitdauer über einen zweiten festgesetzten Wert (tₑ, tᵥ) die Mittel (5) zum Sichern oder die Mittel (6) zum Entsichern entsprechend dem zweiten Signal aktivierbar sind.

6. Anordnung nach einem der Ansprüche 1 bis 5, **dadurch gekennzeichnet, dass** die Auslöseelemente (3, 4) Sensoren, insbesondere Berührungssensoren sind, die jeweils zumindest ein Sensorsignal erzeugen.

7. Anordnung nach Anspruch 6, **dadurch gekennzeichnet, dass** die Sensorsignale von zumindest einem Mittel (2) zur Vorverarbeitung empfangbar sind, durch das die Auslösesignale zum Sichern beziehungsweise Entsichern erzeugbar sind.

8. Anordnung nach Anspruch 7, **dadurch gekennzeichnet, dass** durch das Mittel (2) zur Vorverarbeitung ein kombiniertes Signal erzeugbar ist, das die Auslösesignale zum Sichern beziehungsweise Entsichern umfasst.

## Claims

1. Arrangement for locking and unlocking a motor vehicle, comprising a controller (1), at least two triggering elements (3, 4) and at least one means (5, 6) for locking and unlocking , wherein
- a triggering signal for locking can be sent to the controller by operating a first triggering element (3) of the triggering elements (3, 4),
- a triggering signal for unlocking can be sent to the controller by operating a second triggering element (4) of the triggering elements (3, 4),
- the means (5) for locking or the means (6) for unlocking can be activated by the controller (1) on the basis of the received triggering signal for locking and/or the received triggering signal for unlocking, in order to lock or unlock the motor vehicle,
- it being possible for in each case only the means (5) for locking or only the means (6) for unlocking to be activated by the controller (1) when the triggering signal for locking and the triggering signal for unlocking are received at the same time or one immediately after the other,
**characterized**
**in that** the duration of the chronologically first signal is detected by the controller (1) when the triggering signal for locking and the triggering signal for unlocking are received one immediately after the other.

2. Arrangement according to Claim 1, **characterized in that** the simultaneous reception of the triggering signal for locking and the triggering signal for unlocking is regarded by the controller (1) as reception of the triggering signal for locking or the triggering signal for unlocking.

3. Arrangement according to Claim 1 or 2, **characterized in that** the means (5) for locking or the means (6) for unlocking can be activated by the controller (1) in accordance with the first signal when the duration exceeds a first fixed value (tₑ, tᵥ).

4. Arrangement according to Claim 3, **characterized in that** the duration of the chronologically second signal can be detected by the controller (1) when the duration falls below the first fixed values (tₑ, tᵥ).

5. Arrangement according to Claim 4, **characterized in that** the means (5) for locking or the means (6) for unlocking can be activated by the controller (1) in accordance with the second signal when the duration exceeds a second fixed value (tₑ, tᵥ).

6. Arrangement according to one of Claims 1 to 5, **characterized in that** the triggering elements (3, 4) are sensors, in particular touch sensors, which each generate at least one sensor signal.

7. Arrangement according to Claim 6, **characterized in that** the sensor signals can be received by at least one means (2) for preprocessing, and the triggering signals for locking and unlocking can be generated by the said means for preprocessing.

8. Arrangement according to Claim 7, **characterized in that** a combined signal, which comprises the triggering signals for locking and unlocking, can be generated by the means (2) for preprocessing.

## Revendications

1. Arrangement pour verrouiller ou déverrouiller un véhicule automobile avec un appareil de commande (1), au moins deux éléments de déclenchement (3, 4) et au moins un moyen (5, 6) pour verrouiller ou déverrouiller, dans lequel
- la manoeuvre d'un premier élément de déclenchement (3) des éléments de déclenchement (3, 4) permet d'émettre un signal de déclenchement vers l'appareil de commande pour verrouiller,
- la manoeuvre d'un deuxième élément de déclenchement (4) des éléments de déclenchement (3, 4) permet d'émettre un signal de déclenchement vers l'appareil de commande pour déverrouiller,
- la réception par l'appareil de commande (1) du signal de déclenchement pour verrouiller et/ou du signal de déclenchement pour déverrouiller permet d'activer les moyens (5) pour verrouiller ou les moyens (6) pour déverrouiller pour verrouiller ou déverrouiller le véhicule automobile,
- la réception simultanée successive et rapprochée du signal de déclenchement pour verrouiller et du signal de déclenchement pour déverrouiller par l'appareil de commande (1) ne permet d'activer que les moyens (5) pour verrouiller ou les moyens (6) pour déverrouiller,
**caractérisé en ce que** lors de la réception successive et rapprochée du signal de déclenchement pour verrouiller et du signal de déclenchement pour déverrouiller par l'appareil de commande (1), on enregistre la durée du signal arrivé premier.

2. Arrangement selon la revendication 1, **caractérisé en ce que** la réception simultanée du signal de déclenchement pour verrouiller et du signal de déclenchement pour déverrouiller est considérée par l'appareil de commande (1) comme la réception du signal de déclenchement pour verrouiller ou du signal de déclenchement pour déverrouiller.

3. Arrangement selon la revendication 1 ou 2, **caractérisé en ce que** les moyens (5) pour verrouiller ou les moyens (6) pour déverrouiller peuvent être activés par l'appareil de commande (1) en fonction du premier signal lors du passage de la durée au-delà d'une première valeur définie (tₑ, tᵥ).

4. Arrangement selon la revendication 3, **caractérisé en ce que** la durée du signal arrivé deuxième peut être enregistrée par l'appareil de commande (1) lors du passage de la durée à une valeur inférieure aux premières valeurs définies (tₑ, tᵥ).

5. Arrangement selon la revendication 4, **caractérisé en ce que** les moyens (5) pour verrouiller ou les moyens (6) pour déverrouiller peuvent être activés par l'appareil de commande (1) en fonction du deuxième signal lors du passage de la durée au-delà d'une deuxième valeur définie (tₑ, tᵥ).

6. Arrangement selon une des revendications 1 à 5, **caractérisé en ce que** les éléments de déclenchement (3, 4) sont des capteurs, notamment des capteurs de contact qui génèrent respectivement au moins un signal de capteur.

7. Arrangement selon la revendication 6, **caractérisé en ce que** les signaux des capteurs peuvent être reçus par au moins un moyen (2) pour le prétraitement permettant de générer les signaux de déclenchement pour verrouiller respectivement déverrouiller.

8. Arrangement selon la revendication 7, **caractérisé en ce que** le moyen (2) pour le prétraitement permet de générer un signal combiné englobant les signaux de déclenchement pour verrouiller respectivement déverrouiller.
